# EUROPÄISCHE PATENTANMELDUNG

(11) **EP 1 767 789 A2**
(43) Veröffentlichungstag der Anmeldung: **28.03.2007**
(21) Anmeldenummer: 06016065.2
(22) Anmeldetag: 02.08.2006
(51) Int. Cl.: F04D 15/00, F16K 15/02, F16K 31/12

(54) **Einrichtung zur Fluidsteuerung und damit ausgestattete Pumpeinrichtung**

(30) Priorität: 21.09.2005 DE 102005045861
(71) Anmelder: GARDENA Manufacturing GmbH, 89079 Ulm (DE)
(72) Erfinder: Agrawal, Ram Krishna, 89231 Neu-Ulm (DE); Renner, Thomas, 89079 Ulm (DE)
(74) Vertreter: Patentanwälte Ruff, Wilhelm, Beier, Dauster & Partner

(57) **Zusammenfassung**

Einrichtung zur Fluidsteuerung (7,8) mit zumindest einem Steuerglied (13,14), das für eine Beeinflussung eines mit einem Fluiddruck beaufschlagbaren Fluids ausgebildet und zwischen zumindest zwei Steuerstellungen bewegbar ist und dem zumindest eine Betätigungseinrichtung (19,20) zugeordnet ist, die für eine zwangsweise Überführung des Steuerglieds in eine Zwangsstellung vorgesehen ist. Die Betätigungseinrichtung (19,20) ist für eine vom Fluiddruck abhängige Freigabe des Steuerglieds (13,14) aus der Zwangsstellung ausgebildet. Verwendung für Pumpeinrichtungen.

## Beschreibung

Die Erfindung betrifft eine Einrichtung zur Fluidsteuerung mit zumindest einem Steuerglied, das für eine Beeinflussung eines mit einem Fluiddruck beaufschlagbaren Fluids ausgebildet und zwischen zumindest zwei Steuerstellungen bewegbar ist und dem zumindest eine Betätigungseinrichtung zugeordnet ist, die für eine zwangsweise Überführung des Steuerglieds in eine Zwangsstellung vorgesehen ist, sowie ein Gehäusebauteil mit einer derartigen Einrichtung und eine damit ausgestattete Pumpeinrichtung.

Aus dem Stand der Technik, insbesondere aus dem Produktprogramm der Anmelderin, ist eine als Hauswasserautomat bezeichnete Pumpeinrichtung bekannt, die für die Förderung von Wasser aus einer Quelle oder einem Wasserspeicher in ein Haus- und/oder Gartenwasserleitungsnetz vorgesehen ist. Die Pumpeinrichtung ist mit einer Einrichtung zur Fluidsteuerung für eine Beeinflussung des geförderten Wassers versehen. Die Einrichtung zur Fluidsteuerung ist in einem als Ventilgehäuse ausgeführten Gehäusebauteil aufgenommen, das einen Druckraum bildet und ist als Rückschlagventil ausgeführt, um die Pumpeinrichtung nach Beendigung eines Pumpvorgangs von einem im Wasserleitungsnetz aufgebauten hydrostatischen Druck zu entkoppeln, und nun bei abgeschalteter Pumpe ein Einströmen von Luft über den Pumpenausgang in den Pumpenraum zu verhindern. Das Steuerglied ist als Ventilkörper des Rückschlagventils verwirklicht und kann zwischen einer Öffnungsstellung und einer Schließstellung des Rückschlagventils bewegt werden. Um beispielsweise nach einer Neuinstallation der Pumpeinrichtung oder nach der Durchführung von Wartungsarbeiten an der Pumpeinrichtung eine einfache Inbetriebnahme der unvollständig mit Wasser befüllten und bereits mit dem Wasserleitungsnetz verbundenen Pumpeinrichtung zu gewährleisten, ist dem Rückschlagventil eine Betätigungseinrichtung zugeordnet. Diese ermöglicht es, das Steuerglied in eine Zwangsstellung zu bringen, in der das Ansaugen von Wasser über die Saugleitung aus der Quelle erleichtert ist. Bei der bekannten Pumpeinrichtung ist die Zwangsstellung des Steuerglieds eine entgegen einer Rückstellkraft des Rückschlagventils einzunehmende Öffnungsstellung, so dass Luft aus der Pumpeinrichtung abströmen kann und ein Zuströmen von Wasser in die Pumpeinrichtung erleichtert wird. Bei der bekannten Pumpeinrichtung ist die Betätigungseinrichtung als Schwenkhebel ausgeführt, der über einen Steuernocken auf das Steuerglied einwirkt und damit die gewünschte Überführung in die Zwangsstellung ermöglicht. Die Betätigungseinrichtung wird von einem Benutzer der Pumpeinrichtung zur Unterstützung des Ansaugvorgangs bei Inbetriebnahme der Pumpenrichtung manuell aus einer Ruhelage in eine Funktionsposition gestellt. Dadurch wird das Steuerglied in die Zwangsstellung gebracht und die Pumpeinrichtung kann für eine vollständige Befüllung mit Wasser und für die Erbringung der gewünschten Pumpleistung gestartet werden. Nach Aufbau des Betriebs-Ausgangsdruckes muss der Benutzer die Bedieneinrichtung manuell aus der Funktionsposition in die Ruhestellung zurückbewegen, um das Steuerglied aus der Zwangsstellung freizugeben und eine Fehlfunktion der Pumpeinrichtung zu verhindern.

Die der Erfindung zugrundeliegende Aufgabe besteht darin, eine Einrichtung zur Fluidsteuerung zu schaffen, die eine Vereinfachung der Inbetriebnahme der Pumpeinrichtung ermöglicht.

Diese Aufgabe wird durch eine Einrichtung zur Fluidsteuerung der eingangs genannten Art gelöst, bei der die Betätigungseinrichtung für eine vom Fluiddruck abhängige Freigabe des Steuerglieds aus der Zwangsstellung ausgebildet ist. Dadurch ist sichergestellt, dass die Einrichtung zur Fluidsteuerung bei Erreichen eines konstruktiv vorgebbaren Fluiddrucks in einen Normalzustand zurückkehrt, in dem die Zwangsstellung des Steuerglieds aufgehoben ist, ohne dass es dafür einer Handlung des Bedieners bedarf. Dadurch können Fehlfunktionen vermieden werden, die durch ein von der Betätigungseinrichtung in der Zwangsstellung arretiertes Steuerglied hervorgerufen werden können. Die Erfindung macht sich die Erkenntnis zunutze, dass ein ausreichender Fluiddruck am Pumpenausgang erst erreicht wird, wenn keine oder nahezu keine Luft im Druckraum vorhanden ist, so dass der Fluiddruck am Pumpenausgang als Anzeichen für einen luftfreien Druckraum dienen kann und keine weitere Notwendigkeit für ein Verbleiben des Steuerglieds in der Zwangsstellung gegeben ist.

In Ausgestaltung der Erfindung weist die Betätigungseinrichtung zumindest eine mit dem Fluiddruck beaufschlagbare Wirkfläche auf, die für eine Aufbringung einer Rückstellkraft zur Freigabe des Steuerglieds aus der Zwangsstellung in Abhängigkeit des Fluiddrucks vorgesehen ist. Die Wirkfläche ermöglicht die Ausnutzung des Fluiddrucks für eine Rückstellung der Betätigungseinrichtung, so dass keine zusätzlichen Kräfte auf die Betätigungseinrichtung eingeleitet werden müssen, um die Freigabe des Steuerglieds aus der Zwangsstellung zu bewirken. Die Wirkfläche ist derart ausgelegt, dass sie bei Auftreten eines für die Einrichtung zur Fluidsteuerung typischen Fluiddrucks, der insbesondere bei Erreichung einer vollständigen Füllung einer Pumpeinrichtung vorliegen kann, zu einer durch den Fluiddruck hervorgerufenen Kraftwirkung führt, die die Freigabe des Stellglieds herbeiführt. Die Wirkfläche ist insbesondere diejenige Fläche, auf die der Fluiddruck einwirkt, ohne dass ein entsprechender Gegendruck vorliegt. Bei einer bevorzugten Ausführungsform der Erfindung ist die Freigabe des Steuerglieds bei einem Anstieg des Fluiddrucks vorgesehen, das heißt die Betätigungseinrichtung wird durch den ansteigenden Fluiddruck verdrängt, ohne eine Gegenkraft zumindest gleicher Höhe aufbringen zu können. Eine aus dem Fluiddruck auf die Wirkfläche resultierende Druckkraft auf die Betätigungseinrichtung ist derart ausgerichtet, dass eine Freigabe des Steuerglieds durch eine Relativbewegung der Betätigungseinrichtung erfolgen kann.

In weiterer Ausgestaltung der Erfindung weist die Betätigungseinrichtung einen Steuerzapfen auf, der für eine Übertragung einer Steuerkraft und/oder Steuerbewegung auf das Steuerglied vorgesehen ist. Mit dem Steuerzapfen kann eine kraft- und/oder formschlüssige Wirkverbindung zwischen der Betätigungseinrichtung und dem Steuerglied erreicht werden. Der Steuerzapfen tritt insbesondere mit einer korrespondierend gestalteten Steuerfläche des Steuerglieds in Wirkverbindung und überträgt dabei eine Steuerkraft und/oder ruft dadurch eine Steuerbewegung des Steuerglieds hervor. Die Gestaltung des Steuerzapfens in dem Bereich, in dem eine Wechselwirkung mit dem Steuerglied vorgesehen ist, kann insbesondere zumindest abschnittsweise keilförmig ausgeführt sein, um eine vorteilhafte Ansteuerung des Steuerglieds zu ermöglichen.

In weiterer Ausgestaltung der Erfindung ist der Steuerzapfen für eine im wesentlichen orthogonal zur Wirkfläche ausgerichtete Steuerbewegung zur Rückführung des Steuerglieds aus der Zwangsstellung ausgebildet.

Da die vom Fluiddruck auf die Wirkfläche ausgeübte Kraft orthogonal zur Wirkfläche angreift, lässt sich mit einer Steuerbewegung, die orthogonal zur Wirkfläche stattfindet, eine vorteilhafte Kraftausnutzung erzielen. Als Steuerbewegung ist die Relativbewegung des Steuerzapfens gegenüber dem Steuerglied oder einer mit dem Steuerglied wirkverbundenen Einrichtung anzusehen. Der Steuerzapfen kann derart ausgebildet sein, dass die Steuerbewegung zu einer orthogonalen Bewegung, also einer Bewegung des Steuerglieds quer zur Steuerbewegung führt, wie dies insbesondere bei einem keilförmig gestalteten Steuerzapfen der Fall ist. Eine Gestaltung des Steuerzapfens, die auf den Kraftangriff des Fluiddrucks auf die Wirkfläche abgestimmt ist, ermöglicht somit eine günstige Umsetzung der vom Fluiddruck hervorgebrachten Kraft in die Steuerbewegung und damit in die Rückführung des Steuerglieds aus der Zwangsstellung in die Normalstellung. Denkbar ist auch eine Umsetzung der Steuerbewegung des Steuerzapfens in eine Rotationsbewegung oder eine kombinierte Rotations- und Translationsbewegung des Steuerglieds, um die gewünschte Rückführung aus der Zwangsstellung zu erreichen.

Die der Erfindung zugrundeliegende Aufgabe wird auch durch ein Gehäusebauteil gelöst, das einen Druckraum zur Aufnahme zumindest einer Einrichtung zur Fluidsteuerung nach einem der Ansprüche 1 bis 4 aufweist und bei dem die Betätigungseinrichtung für eine Abdichtung eines in einer Begrenzungswand des Gehäusebauteils vorgesehenen Gehäusedurchtritts ausgebildet ist. Das Gehäusebauteil kann insbesondere als Ventilgehäuse für ein Stellventil oder ein Rückschlagventil ausgeführt sein und als eigenständige, separat montierbare Baugruppe oder als einstückig, insbesondere an einem Pumpengehäuse, angebrachter Druckraum vorgesehen sein. Das Gehäusebauteil weist zumindest eine Begrenzungswand auf, die den Druckraum begrenzt und zur Aufnahme der Einrichtung zur Fluidsteuerung dient. In der Begrenzungswand ist zumindest ein als Durchbruch ausgeführter Gehäusedurchtritt vorgesehen, der durch die Betätigungseinrichtung verschlossen wird. Die Betätigungseinrichtung ist derart in dem Durchtritt angebracht, dass eine Relativbewegung zwischen Betätigungsrichtung und Begrenzungswand, insbesondere in orthogonaler Richtung zur Begrenzungswand möglich ist.

In weiterer Ausgestaltung der Erfindung ist die Betätigungseinrichtung schiebebeweglich in der Begrenzungswand aufgenommen. Damit kann eine einfache Betätigung der Betätigungsvorrichtung durch einen Benutzer sowie eine günstige Umsetzung der Steuerbewegung in eine Bewegung des Steuerglieds verwirklicht werden. Die Betätigungsvorrichtung kann insbesondere als Drucktaste ausgeführt sein, die durch den Benutzer zur Erzielung der Zwangsstellung für das Steuerglied in Richtung des Gehäusebauteils gedrückt wird.

In weiterer Ausgestaltung der Erfindung ist das Steuerglied als Ventilkörper eines Rückschlagventils ausgebildet und für den Verschluss eines am Druckraum angebrachten Fluidkanals vorgesehen. Damit kann das Steuerglied ein Abströmen von druckbeaufschlagtem Fluid in einen Fluidkanal verhindern, in dem ein geringerer Fluiddruck herrscht. Alternativ kann das Steuerglied auch ein Einströmen von Fluid in den Druckraum verhindern, das unter einem größeren Fluiddruck als das Fluid im Druckraum steht. Damit ermöglicht das Steuerglied die Aufrechterhaltung von konstruktiv vorgebbaren Druckverhältnissen im Druckraum.

In weiterer Ausgestaltung der Erfindung ist die Betätigungseinrichtung für eine Zwangssteuerung des Steuerglieds in eine Öffnungsposition ausgebildet. Das Steuerglied wird somit durch die Betätigungseinrichtung aus einer undefinierten Steuerstellung oder einer insbesondere durch eine Ventilfeder eindeutig definierten, den Fluidkanal verschließenden Steuerstellung zwangsweise in eine Steuerstellung gebracht, in der der Fluidkanal geöffnet ist und in das Fluid aus dem Druckraum oder in den Druckraum strömen kann. Dadurch wird beispielsweise eine Entlüftung des Druckraums oder ein Fluten des Druckraums mit Fluid erleichtert.

In weiterer Ausgestaltung der Erfindung ist das Rückschlagventil für eine Schließfunktion bei einem Überdruck im Fluidkanal angeordnet. Damit kann insbesondere ein Rückstrom von Fluid aus dem Fluidkanal in den Druckraum verhindert werden. Dies ist insbesondere bei einem druckseitigen Pumpenauslassstutzen der Fall, der mit einem in vertikaler Richtung oberhalb der Pumpeinrichtung angeordneten Wasserleitungsnetzwerk verbunden ist. Durch die im Wasserleitungsnetzwerk eingeschlossene Wassersäule liegt am Fluidkanal ein hydrostatischer Druck vor. Dieser hydrostatische Druck kann durch das Steuerglied blockiert werden und wird nicht in den Druckraum eingeleitet, so dass dort ein geringerer Druck herrschen kann.

In weiterer Ausgestaltung der Erfindung ist das Rückschlagventil für eine Schließfunktion bei einem Unterdruck im Fluidkanal angeordnet. Damit kann insbesondere ein Abströmen von druckbeaufschlagtem Fluid aus dem Druckraum in den Fluidkanal, in dem ein geringerer Fluiddruck herrscht, vermieden werden. Dies kann insbesondere bei einem Ansaugstutzen einer Pumpeinrichtung der Fall sein, bei dem der hydrostatische Druck in einem in vertikaler Richtung unterhalb der Pumpeinrichtung vorgeschalteten Steigrohr zu einem Unterdruck im Bereich des Fluidkanals führen kann. Das Steuerglied verhindert hierbei ein Abströmen von Fluid aus der Pumpeinrichtung, so dass die Pumpenrichtung für einen nachfolgenden Pumpvorgang mit Fluid befüllt bleibt und sofort die volle Pumpleistung erbringen kann.

Die der Erfindung zugrundeliegende Aufgabe wird auch durch eine Pumpeinrichtung mit zumindest einer Fluidpumpe gelöst, die ein mit einer Einrichtung zur Fluidsteuerung ausgestattetes Gehäusebauteil nach einem der Ansprüche 5 bis 10 aufweist. Die Pumpeinrichtung kann insbesondere als ein mit einem Druckspeicher versehenes Hauswasserwerk oder als Hauswasserautomat mit einer Steuerung oder Regelung des von der Fluidpumpe aufgebrachten Fluiddrucks verwirklicht werden.

Weitere Vorteile und Merkmale der Erfindung ergeben sich aus den Ansprüchen sowie der nachfolgenden Beschreibung bevorzugter Ausführungsformen der Erfindung, die anhand der Zeichnungen dargestellt sind. Dabei zeigt:
- Fig. 1: ein Blockschaltbild einer Pumpeinrichtung, die als Hauswasserwerk saugseitig mit einer Einrichtung zur Fluidsteuerung versehen ist,
- Fig. 2: ein Blockschaltbild einer Pumpeinrichtung, die als Hauswasserautomat druckseitig mit einer Einrichtung zur Fluidsteuerung versehen ist,
- Fig. 3: in einer Schnittdarstellung die druckseitig an der Pumpeinrichtung der Fig. 1 angebrachte Fluidsteuerung,
- Fig. 4: in einer Schnittdarstellung die saugseitig an der Pumpeinrichtung der Fig. 1 angebrachte Fluidsteuerung.

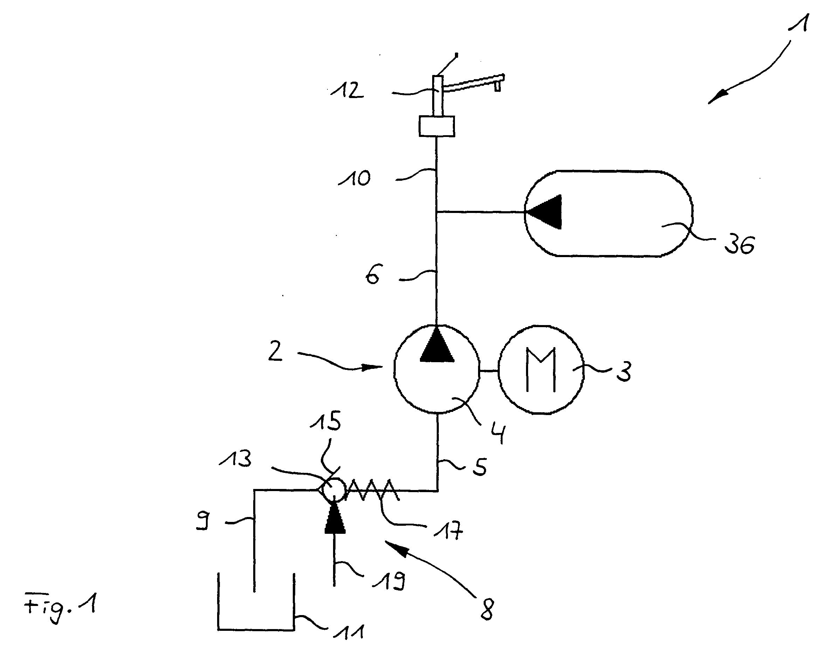

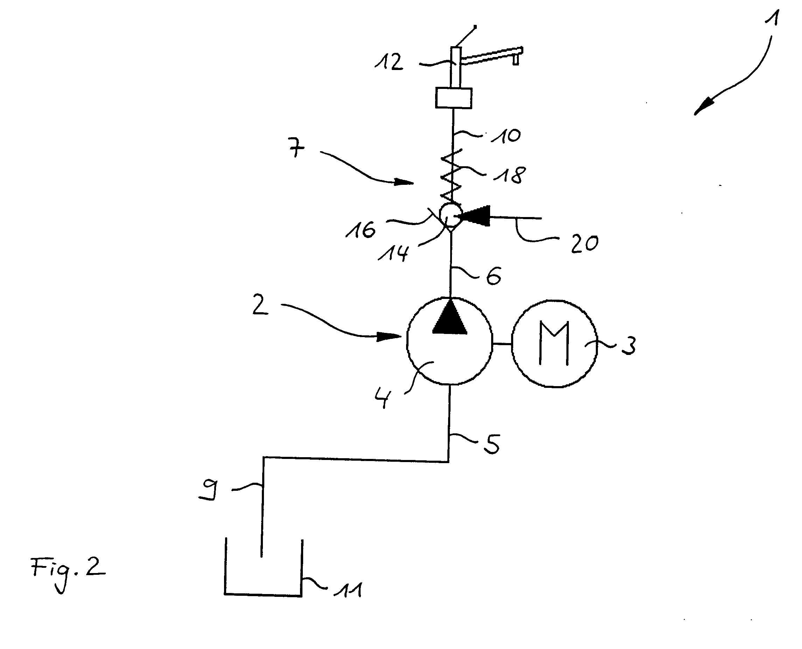

In der nachstehenden Beschreibung der Figuren sind für eine bessere Übersicht gleichartige Elemente mit gleichen Bezugszeichen versehen. Bei der in den Fig. 1 und 2 dargestellten Pumpeinrichtung 1 ist eine Kreiselpumpe 2, die nach einem Venturi-Jet-Prizip arbeitet, mit einem als Elektromotor 3 ausgeführten Antrieb ausgestattet und weist ein Pumpengehäuse 4 auf, an dem ein Einlasskanal 5 und ein Auslasskanal 6 vorgesehen sind.

Bei der als Hauswasserwerk ausgeführten Pumpeinrichtung gemäß der Fig. 1 ist dem Einlasskanal 5 ein Rückschlagventil 7 zugeordnet, das den vom Pumpengehäuse 4 gebildeten Druckraum und einen druckseitig angeschlossenen Druckspeicher 36 gegenüber einer saugseitig an der Kreiselpumpe 2 vorgesehenen Zuleitung 9 verschließen kann.

Bei der als Hauswasserautomat ausgeführten Pumpeinrichtung gemäß der Fig. 2 ist dem Auslasskanal 6 ein Rückschlagventil 8 zugeordnet, um eine druckseitig an der Kreiselpumpe 2 vorgesehene Ableitung 10 verschließen zu können.

Bei beiden Ausführungsformen der Pumpeinrichtung ist die Zuleitung 9 als Steigrohr ausgeführt und mündet in einem Wasserbehälter 11, der beispielsweise als Zisterne ausgeführt sein kann. An der Ableitung 10 ist ein Wasserhahn 12 vorgesehen, der als Entnahmestelle des von der Pumpeinrichtung geförderten Wassers dient. Die Rückschlagventile 7, 8 weisen jeweils einen Ventilkörper 13, 14 auf, der jeweils in einem Ventilsitz 15, 16 aufgenommen ist. Dem Ventilkörper 13, 14 ist eine Ventilfeder 17, 18 zugeordnet, die den Ventilkörper 13, 14 in den Ventilsitz 15, 16 presst. Den Rückschlagventilen 7, 8 sind jeweils erfindungsgemäße Betätigungseinrichtungen 19, 20 zugeordnet, die ein Auslenken der Ventilkörper 13, 14 aus der in der Fig. 1 dargestellten Ruheposition in eine nicht dargestellte Öffnungsposition ermöglichen, in der ein Fluid, insbesondere Wasser oder Luft, ohne einen größeren Strömungswiderstand durch die Rückschlagventile strömen kann.

Bei der in der Fig. 2 dargestellten Ruheposition der Pumpeinrichtung 1 kann von der Ableitung 10 und dem daran angeschlossenen Wasserleitungsnetz ein hydrostatischer Druck auf das Rückschlagventil 8 ausgeübt werden. Das Rückschlagventil 8 ist derart an dem Pumpengehäuse 4 angeordnet, dass es gegen einen von außen auftretenden Überdruck aus der Ableitung 10 sperrt, so dass die Kreiselpumpe 2 nicht von dem hydrostatischen Druck in der Ableitung 10 beaufschlagt wird.

Bei der in der Fig. 1 dargestellten Ruheposition der Pumpeinrichtung 1 ist das an der Zuleitung 9 angebrachte Rückschlagventil 7 hingegen derart angeordnet, dass ein im Pumpengehäuse 4 und im Druckspeicher 36 vorliegender Fluiddruck nicht über die Zuleitung 9 abgebaut werden kann. Dadurch wird auch vermieden, dass die in der Zuleitung 9 eingeschlossene Wassersäule abströmt und der Pumpeinrichtung 1 beim Anlaufen der Kreiselpumpe 2 nicht unmittelbar Wasser zur Förderung zur Verfügung steht.

Sobald die Kreiselpumpe 2 durch den Elektromotor 3 in Betrieb genommen wird, kann beim Hauswasserautomaten gemäß der Fig. 2 in dem Pumpengehäuse 4 ein Wasserdruck aufgebaut werden, der größer als der hydrostatische Druck in der Ableitung 10 ist und der dadurch zu einem Öffnen des Rückschlagventils 8 führen kann, sofern Wasser am Wasserhahn 12 entnommen wird. Dabei bewegt sich der Ventilkörper 14 aus dem Ventilsitz 16 und ermöglicht somit einen Fluidstrom durch das Rückschlagventil 8. Beim Hauswasserwerk nach der Fig. 1 wird durch die Saugwirkung der Kreiselpumpe 2 ein Unterdruck gegenüber dem Zulauf 9 hervorgerufen, der zu einem Öffnen des Rückschlagventils 7 führt und ein Nachströmen von Wasser aus dem Wasserbehälter 11, d.h. der Quelle bzw. dem Speicher, ermöglicht.

Sofern die Pumpeinrichtung 1 neu an das Wasserleitungsnetz angeschlossen wurde oder Reparaturarbeiten an der Pumpeinrichtung 1 durchgeführt wurden, kann die Situation auftreten, dass das Pumpengehäuse 4 der Kreiselpumpe 2 nicht vollständig mit Wasser, sondern zumindest teilweise mit Luft gefüllt ist. Dann erreicht die Kreiselpumpe 2 beim Betrieb nicht die volle Pumpleistung und kann eventuell kein frisches Wasser über die Zuleitung 9 ansaugen und in die Ableitung 10 fördern. Das Ansaugen von frischem Wasser über die Zuleitung 9 wird beim Hauswasserwerk nach Fig. 1 durch das geschlossene Rückschlagventil 7 erschwert, das in Anbetracht der Federvorbelastung einen gewissen Strömungswiderstand hervorruft. Gleiches gilt auch für das am Auslasskanal 6 vorgesehene Rückschlagventil 8 des Hauswasserautomaten nach Fig. 2. Um die Ansaugung von Wasser für eine Neu- oder Wiederbefüllung der Pumpeinrichtung 1 zu erleichtern, sind den Rückschlagventilen 7, 8 jeweils die Betätigungseinrichtungen 19, 20 zugeordnet, die von einem Bediener betätigt werden können. Bei Betätigung werden die Ventilkörper 13, 14 zwangsweise aus den jeweiligen Ventilsitzen 15, 16 gehoben, um den durch die Rückschlagventile 7, 8 hervorgerufenen Strömungswiderstand erheblich zu senken. Damit kann die Pumpeinrichtung 1 gemäß den Fig. 1 und 2 unter erleichterten Bedingungen Wasser aus dem Wasserbehälter 11 ansaugen und in das Wasserleitungsnetz fördern.

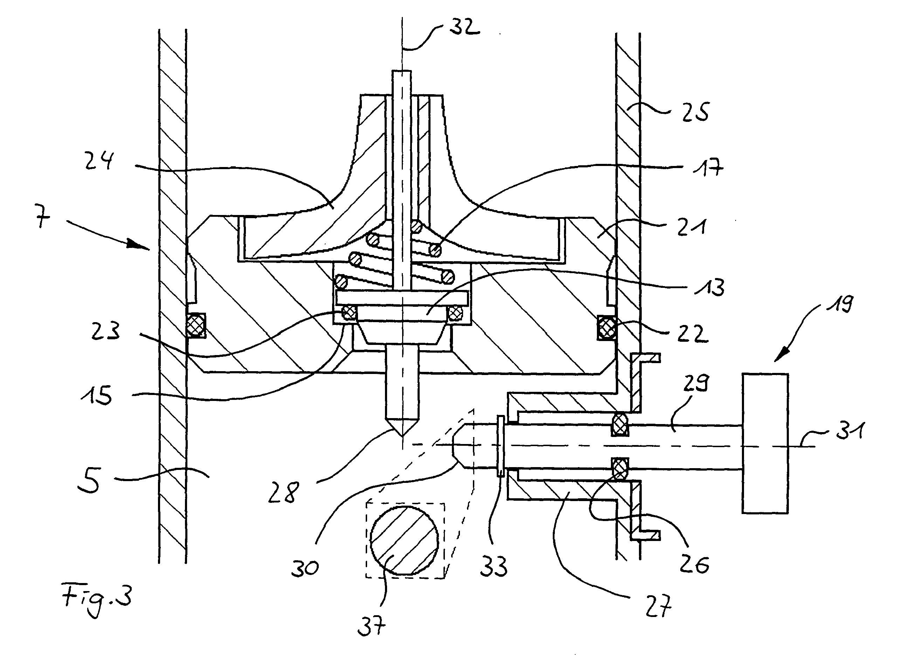

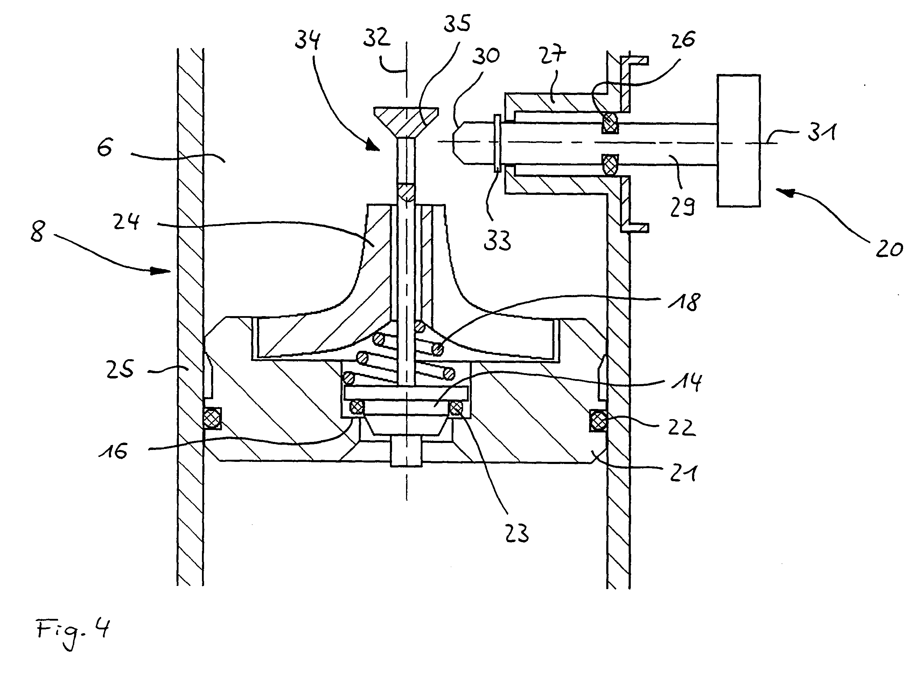

In den Fig. 3 und 4 sind das dem Einlasskanal 5 zugeordnete Rückschlagventil 7 sowie das dem Auslasskanal 6 zugeordnete Rückschlagventil 8 näher dargestellt. Die Rückschlagventile 7, 8 sind sich im Aufbau grundsätzlich ähnlich und unterscheiden sich im Wesentlichen im Hinblick auf die Anlenkung mittels der Betätigungseinrichtungen 19, 20.

Die Rückschlagventile 7, 8 weisen einen Grundkörper 21 auf, der in dem Einlasskanal 5 oder dem Auslasskanal 6 mit einer als O-Ring ausgeführten Ringdichtung 22 abdichtend eingesetzt ist. In dem Grundkörper ist der tellerförmige Ventilkörper 13, 14 schiebebeweglich aufgenommen und bildet über eine als O-Ring ausgeführte Ventildichtung 23 mit dem im Grundkörper 21 vorgesehenen Ventilsitz 15, 16 einen variablen Ventilspalt aus. Dem Ventilkörper 13, 14 ist eine Ventilfeder 17, 18 zugeordnet, die als vorgespannte Druckfeder ausgeführt ist und eine Schließkraft auf den Ventilkörper 13, 14 in Richtung des Ventilsitzes 15, 16 ausübt. Dadurch befinden sich die Rückschlagventile 7, 8 ohne die Einwirkung äußerer Einflüsse in einer in den Fig. 3, 4 dargestellten, geschlossenen Ruhestellung. Die Ventilfedern 17, 18 sind an einem fest mit dem Grundkörper 21 verbundenen Führungskörper 24 abgestützt, der auch eine Schiebeführung für einen stabförmigen Fortsatz des Ventilkörpers 13, 14 bildet, der sich längs einer Ventilachse 32 erstreckt.

Das dem Einlasskanal 5 zugeordnete Rückschlagventil 7 ist derart angeordnet, dass es einen Rückstrom von Fluid aus dem Pumpengehäuse 4 verhindert. Das Nachströmen von Luft kann verhindert werden. Um einen Ansaugvorgang der Kreiselpumpe 2 zu erleichtern, ist dem Rückschlagventil 7 eine als Druckknopf ausgeführte Betätigungseinrichtung 19 zugeordnet, wobei der Druckknopf 19 schiebebeweglich durch eine Begrenzungswand 25 geführt ist.

Die Betätigungseinrichtung 19 weist einen zylindrischen Steuerzapfen 29 auf, der mit einer als O-Ring ausgeführten Schiebedichtung 26 versehen ist und eine Mittelachse 31 aufweist. Der Steuerzapfen 29 ist in einer in der Begrenzungswand 25 eingeformten Führungsbuchse 27 abdichtend verschiebbar angeordnet. An einem dem Rückschlagventil 7 zugewandten Endbereich ist an dem Steuerzapfen 29 eine Konusfläche 30 angebracht, die auf eine an einem zylindrischen Fortsatz des Ventilkörpers 13 angebrachte konisch geformte Steuerfläche 28 einwirken kann. Somit kann bei einer translatorischen Steuerbewegung des Steuerzapfens längs der Mittelachse 31 und quer zur Steuerbewegung des Steuerzapfens 29 eine Bewegung des Ventilkörpers 13 längs der Ventilachse 32 herbeigeführt werden.

Wenn ein Benutzer den Druckknopf der Betätigungseinrichtung 19 drückt, also mit einer Druckkraft in Richtung der Mittelachse 31 beaufschlagt, führt dies bei ausreichender Krafteinwirkung zu einer Steuerbewegung der Betätigungseinrichtung 19. Die Steuerbewegung findet entgegen einem Reibungswiderstand zwischen der Schiebedichtung 26 und der Führungsbuchse 27 statt. Im Zuge der Steuerbewegung kommt die Konusfläche 30 mit der Steuerfläche 28 in Wirkverbindung und der Ventilkörper 13 kann entgegen der Rückstellkraft der Ventilfeder 18 in Richtung der Ventilachse aus der Ruheposition gedrängt werden, wodurch der Ventilspalt geöffnet wird.

Bei Anlaufen der Kreiselpumpe 2 ist dadurch ein reduzierter Strömungswiderstand bei Förderung von Fluid, vorliegend Wasser, durch die Zuleitung 9 sichergestellt. Durch die Förderung von Fluid steigt im Pumpengehäuse der Fluiddruck an, so dass eine Druckkraft vom Fluid auf den Steuerzapfen 29 ausgeübt wird. Da einer Druckkraft auf eine Querschnittsfläche des Steuerzapfens 29 in einer Querschnittsebene orthogonal zur Mittelachse 31 kein Fluiddruck entgegensteht, ist diese Querschnittsfläche eine Wirkfläche 37 für den Fluiddruck. Bei ausreichendem Fluiddruck können Reibungswiderstände der Betätigungseinrichtung 19 überwunden werden, so dass eine Steuerbewegung längs der Mittelachse 31 stattfindet, bis ein an dem Steuerzapfen 29 vorgesehener Ringbund 33 auf eine Innenfläche der Führungsbuchse 27 aufläuft und die Steuerbewegung begrenzt. Im Zuge dieser Bewegung kann das Rückschlagventil 7 aus der durch die Betätigungseinrichtung 19 bewirkten Zwangsstellung wieder in die in Fig. 3 dargestellte Ruheposition zurückkehren oder eine durch das strömende Fluid bedingte, andere Steuerstellung einnehmen.

Während auf das Rückschlagventil 7 gemäß der Fig. 3 eine Druckkraft ausgeübt wird, um es aus der Ruheposition in die Zwangsstellung zu bringen, ist beim Rückschlagventil 8 gemäß der Fig. 4 vorgesehen, eine Zugkraft durch die Betätigungseinrichtung 20 aufzubringen. Die sonstige Wirkungsweise der Betätigungseinrichtung 20 nach der Fig. 4 entspricht der Wirkung der Betätigungseinrichtung 19 gemäß der Fig. 3. Bei dem Ventilkörper 14 weist der stabförmige Fortsatz gemäß der Schnittdarstellung der Fig. 4 eine Öse 34 auf, die mit Keilflächen 35 versehen ist. Die Öse 34 ist so gestaltet, dass sie den Steuerzapfen 29 aufnehmen kann, so dass die Konusfläche 30 des Steuerzapfens 29 mit der Keilfläche 35 in Wirkverbindung treten kann und eine Öffnung des Rückschlagventils 8 bewirken kann. Bei beiden in den Fig. 3 und 4 dargestellten Betätigungseinrichtungen 19, 20 führt die Steuerbewegung des Steuerzapfens 29 zu einer Zwangsbewegung des Ventilkörpers 13, 14 aus einer Steuerstellung, insbesondere der Ruheposition, in eine Zwangsstellung oder umgekehrt.

Bei einer nicht dargestellten Ausführungsform der Erfindung ist die Betätigungseinrichtung als flexible Membran, insbesondere einstückig, in der Begrenzungswand eingelassen und die zur Ansteuerung des Steuerglieds erforderliche Steuerbewegung des Steuerzapfens erfolgt durch eine Veränderung der Kontur der Membran, insbesondere durch eine Ein- oder Auswölbung der Membran. Damit kann eine besonders einfache Betätigungseinrichtung verwirklicht werden, die bei einer bevorzugten Ausführungsform der Erfindung einstückig in dem als Kunststoffspritzgussteil ausgeführte Gehäusebauteil vorgesehen werden kann.

Bei einer weiteren nicht dargestellten Ausführungsform der Erfindung ist vorgesehen, die Betätigungseinrichtung schwenkbeweglich an der Begrenzungswand anzubringen, wobei eine Schwenkachse im wesentlichen parallel zur Oberfläche der Begrenzungswand im Bereich der Betätigungsvorrichtung ausgerichtet ist. Die Steuerungsbewegung ist bei einer derartigen Ausführung der Betätigungseinrichtung kreisbogenförmig und erlaubt eine direkte Übertragung der Bewegung vom Steuerzapfen auf das Steuerglied. Der Steuerzapfen kann endseitig gabelförmig ausgeführt sein und das Steuerglied bei Betätigung der Betätigungseinrichtung umgreifen und in die Zwangsstellung überführen.

Bei einer weiteren nicht dargestellten Ausführungsform der Erfindung ist vorgesehen, dass die Betätigungseinrichtung nicht unmittelbar auf das Steuerglied einwirkt, sondern für eine Ansteuerung eines mit dem Steuerglied wirkverbundenen Bauteils vorgesehen ist.

## Patentansprüche

1. Einrichtung zur Fluidsteuerung (7, 8) mit zumindest einem Steuerglied (13, 14), das für eine Beeinflussung eines mit einem Fluiddruck beaufschlagbaren Fluids ausgebildet und zwischen zumindest zwei Steuerstellungen bewegbar ist und dem zumindest eine Betätigungseinrichtung (19, 20) zugeordnet ist, die für eine zwangsweise Überführung des Steuerglieds (13, 14) in eine Zwangsstellung vorgesehen ist, **dadurch gekennzeichnet, dass** die Betätigungseinrichtung (19, 20) für eine vom Fluiddruck abhängige Freigabe des Steuerglieds (13, 14) aus der Zwangsstellung ausgebildet ist.

2. Einrichtung zur Fluidsteuerung nach Anspruch 1, **dadurch gekennzeichnet, dass** die Betätigungseinrichtung (19, 20) zumindest eine mit dem Fluiddruck beaufschlagbare Wirkfläche (37) aufweist, die für eine Aufbringung einer Rückstellkraft zur Freigabe des Steuerglieds (13, 14) aus der Zwangsstellung in Abhängigkeit des Fluiddrucks, insbesondere bei einem Anstieg des Fluiddrucks, vorgesehen ist.

3. Einrichtung zur Fluidsteuerung nach Anspruch 2, **dadurch gekennzeichnet, dass** die Betätigungseinrichtung (19, 20) einen Steuerzapfen (29) aufweist, der für eine Übertragung einer Steuerkraft und/oder Steuerbewegung auf das Steuerglied (13, 14) vorgesehen ist.

4. Einrichtung zur Fluidsteuerung nach Anspruch 3, **dadurch gekennzeichnet, dass** der Steuerzapfen (29) für eine im wesentlichen orthogonal zur Wirkfläche (37) ausgerichtete Steuerbewegung zur Rückführung des Steuerglieds (13, 14) aus der Zwangsstellung ausgebildet ist.

5. Gehäusebauteil (4) mit einem Druckraum zur Aufnahme zumindest einer Einrichtung zur Fluidsteuerung (7, 8) nach einem der vorhergehenden Ansprüche, **dadurch gekennzeichnet, dass** die Betätigungseinrichtung (19, 20) für eine Abdichtung eines in einer Begrenzungswand (25) des Gehäusebauteils vorgesehenen Gehäusedurchtritts (27) ausgebildet ist.

6. Gehäusebauteil nach Anspruch 5, **dadurch gekennzeichnet, dass** die Betätigungseinrichtung (19, 20) schiebebeweglich in der Begrenzungswand (25) aufgenommen ist.

7. Gehäusebauteil nach Anspruch 5 oder 6, **dadurch gekennzeichnet, dass** das Steuerglied (13, 14) als Ventilkörper eines Rückschlagventils (7, 8) ausgebildet und für den Verschluss eines am Druckraum angebrachten Fluidkanals (5, 6) vorgesehen ist.

8. Gehäusebauteil nach Anspruch 7, **dadurch gekennzeichnet, dass** die Betätigungseinrichtung (19, 20) für eine Zwangssteuerung des Steuerglieds (13, 14) in eine Öffnungsposition ausgebildet ist.

9. Gehäusebauteil nach Anspruch 8, **dadurch gekennzeichnet, dass** das Rückschlagventil (7, 8) für eine Schließfunktion bei einem Überdruck im Fluidkanal (5, 6) angeordnet ist.

10. Gehäusebauteil nach Anspruch 8, **dadurch gekennzeichnet, dass** das Rückschlagventil (7, 8) für eine Schließfunktion bei einem Unterdruck im Fluidkanal (5, 6) angeordnet ist.

11. Pumpeinrichtung, insbesondere Hauswasserwerk oder Hauswasserautomat, mit zumindest einer Fluidpumpe (2), die ein mit einer Einrichtung zur Fluidsteuerung ausgestattetes Gehäusebauteil (4) nach einem der Ansprüche 5 bis 10.
